Europäisches Patentamt

European Patent Office

Office européen des brevets

(19)

(11) Publication number: **0 228 189 B1**

# EUROPEAN PATENT SPECIFICATION

(12)

(45) Date of publication of patent specification: **17.06.92**  (51) Int. Cl.⁵: **C04B 35/58**, C01B 21/068

(21) Application number: **86309265.6**

(22) Date of filing: **27.11.86**

(54) A method of making silicon nitride powder.

(30) Priority: **23.12.85 US 812217**

(43) Date of publication of application:
**08.07.87 Bulletin  87/28**

(45) Publication of the grant of the patent:
**17.06.92 Bulletin  92/25**

(84) Designated Contracting States:
**DE FR GB**

(56) References cited:
**EP-A- 0 150 048**
**EP-A- 0 225 412**
**WO-A-85/00589**
**WO-A-85/00593**

**CHEMICAL ABSTRACTS, vol. 90, no. 8, 19th
February 1979, page 310, abstract no. 59937x,
Columbus, Ohio, US; & JP-A-78 118 409
(TOKYO SHIBAURA ELECTRIC CO., LTD)
16-10-1978**

**CERAMIC ENGINEERING AND SCIENCE PRO-
CEEDINGS, vol. 6, no. 9/10, September-
October 1985, pages 1278-1288, Columbus,
Ohio, US; K. KASAI et al.: "Synthesis of
Si3N4 powder by thermal decompostion of
Si(NH)2 and sintering properties"**

(73) Proprietor: **FORD MOTOR COMPANY LIMITED
Eagle Way
Brentwood Essex CM13 3BW(GB)**

(84) Designated Contracting States:
**GB**

(73) Proprietor: **FORD-WERKE AKTIENGESELL-
SCHAFT
Werk Köln-Niehl Henry-Ford-Strasse Post-
fach 60 40 02
W-5000 Köln 60(DE)**

(84) Designated Contracting States:
**DE**

(73) Proprietor: **FORD FRANCE SOCIETE AN-
ONYME
344 Avenue Napoléon Bonaparte B.P. 307
F-92506 Rueil Malmaison Cedex(FR)**

(84) Designated Contracting States:
**FR**

(72) Inventor: **Beckwith, Elaine Cecilia
20611 Woodbend Drive
Northville Michigan 48167(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Williams, Robert Mantell**
**34809 Burton Lane**
**Livonia Michigan 48154(US)**

(74) Representative: **Messulam, Alec Moses et al**
**A. Messulam & Co. 24 Broadway**
**Leigh on Sea Essex SS9 1BN(GB)**

**Description**

This invention relates to a method of making a readily fusable, one component, silicon nitride powder.

Silicon nitride is a valuable ceramic because it is one of the few materials that can be used in high temperature structural applications (600-1200°C). It is made from a powder, which powder must be fused together. Recent advancements in the art of making silicon nitride have found that rare earth oxides are well suited to the formation of a crystalline secondary phase which binds together the grains of the silicon nitride powder during fusion. Strength and reliability of the net silicon nitride shape is dependent upon the absence of flaws in the bonding together of such powder grains. Such flaws are the result of impurities or nonhomogeneous distribution of the crystalline secondary phases. Seeking absolute purity and exceptional homogeneous distribution of the desired crystalline and primary silicon nitride phases has remained, until now, aloof from solution.

The most typical way of making silicon nitride is to subject silicon powder to a nitriding gas to form silicon nitride powder. Because of the manner of making silicon powder in commercial quantities, impurities in the amount of about 3 weight percent will be introduced to the process; the impurities comprise trace metals, chalkogenides, carbon and halides. The impurity particles can be as large as 100$\mu$m (microns). Some of these original impurities are somewhat helpful in assisting nucleation of the silicon nitride crystals during nitridation but are a detriment thereafter. Additional impurities, such as excess silicon or oxides phases, are created by incomplete nitridation.

Silicon nitride powder resulting from nitridation is mixed with powdered sintering aids (such as yttrium oxide, alumina or silica) and the desired shape is created by slip casting, injection molding or powder compaction; heat is used to fuse the material to final density (see U.S. patents 4,401,617 and 4,434,238, and see U.S. patent 4,067,943 for nitridation). Unfortunately, this nitridation based method has several drawbacks. The starting powders have different chemical and physical properties (e.g., polarity, solubility, contaminants, crystallinity, surface area, density, melting point) which cause powder separations, yttrium/aluminum concentration gradients, and undesirable chemical reactions during forming and heat fusing. The final objects typically contain voids, laminations, high/low density areas, excess grain growth and impurities in the form of excess glassy secondary phases which decrease the performance and reliability of the heat fused object.

Alternatively, sintering aids can be added directly to the starting silicon powder and the mixture subjected to nitridation to form silicon nitride and crystalline second phases (See U.S. patent 4,477,402). The amount of oxygen carrying agents or sintering aids can be manipulated to form desirable amounts of crystallites and desirable amounts of glass encapsulation on the silicon nitride grains (see U.S. patents 4,501,723 and 4,510,107). Unfortunately, the intrusion of impurities is still present and subjected to the same fusion heat treatment used to form the densified silicon nitride body. These impurities dissolve in the crystallite and glassy phases and severely limit the degree of grain boundary control attainable making the ceramic weak and poor in reliability at high temperatures.

A document entitled "Synthesis of $Si_3N_4$", ceramic Engineering and Science Proceedings 6 (1985) Sept-Oct. No. 9/10 Columbus, Ohio, USA, Pages 1278-1288 discloses synthesis of $Si_3N_4$ sintering aid mixture - by thermal decomposition of $Si(NH)_2$. This document does not suggest one component silicon nitride powder.

It is an object of this invention to make a single component, ultrapure powder than can be fused to make a silicon nitride ceramic that possesses increased strength, modulus of elasticity and wear resistance. One component is used herein to mean that substantially each grain of powder carries the complete chemistry (including the sintering aid) to form the final product. The fusable powder is a single component material, not a mechanical mixture, and the only material that need be charged to make the ceramic. The single component powder consists essentially of pure silicon nitride and chemically reacted pure oxynitride phases.

In a related aspect, it is an object of this invention to make densified silicon nitride utilizing such fusable, one component silicon nitride powder containing such chemically reacted oxynitride phases.

According to the invention there is provided a A method of making a readily fusable, one component silicon nitride powder, which comprises heating a powder mixture of silicon nitride precursor possessing silicon-nitrogen and nitrogen-hydrogen bonds, and a purity of equal to or greater than 99.98% and an oxygen carrying agent effective as a sintering agent, said oxygen carrying agent including 2-12 wt. % $Y_2O_3$, 0.5-4% $Al_2O_3$, and .5-3.5% $SiO_2$ normalized as an $Si_3N_4$ mixture, said heating being carried out in an inert atmosphere at a temperature effectively below the fusion temperature for said mixture and for a period of time sufficient to chemically reduce said mixture to grains of silicon nitride bonded and encapsulated by crystallite phases chemically resulting from both said precursor and agent.

The precursor can be silicon imide or amide, but is preferably silicon imide having the formula $Si(NH)_2$ which possesses an average particle size of less than one micron. Such small particle size makes possible the excellent homogeneity of the mixutre. The term normalized assumes that $Si(NH)_2$ is fully converted to $Si_3N_4$ and the additive ingredients are calculated as a weight percentage of the $Si_3N_4$ mixture. The mixture is preferably homogenized in the nonaqueous and nonorganic wet condition by mechanically or ultrasonically stirring the oxygen agent, under a nonoxidizing atmosphere, into an excess pool of liquid ammonia containing said silicon imide then subsequently volatilizing the ammonia leaving behind the homogenized dry powder mixture.

Alternatively, the mixture can be homogenized by dry blending the starting powders in a nonoxidizing atmosphere for about 24 hours with grinding media and container of the same composition as the fusable, one component silicon nitride powder.

Preferably the heating is carried out in a temperature range of 1150-1350°C and preferably for a period of at least 4 hours, the atmosphere being preferably nonoxidizing and selected from nitrogen, hydrogen, helium and mixtures thereof.

The fusable, one component silicon nitride powder can be subjected to forming and heating under fusable temperature conditions to produce a substantially fully densified ceramic shape. Such fusion heating can be carried out by hot pressing, sintering or hot isostatic pressing. The shaping of the powder mixture can be carried out by slip casting, extruding a mixture by die casting, or pressure compaction.

The fusable, one component silicon nitride powder is characterized by a white color and a purity of equal to or greater than 99.97%. It is also characterized by (a) an average particle size less than one micron, (b) crystalline silicon nitride with a minimum alpha/beta ratio of 4, and (c) encapsulating bonding crystalline yttrium silicon oxynitrides. When such silicon nitride single component is fused, the resulting silicon nitride product is characterized by a four point bend strength of greater than $10.3 \times 10^5$ kPa (150 Kpsi) and Weibull modulus greater than 12, a density greater than 98.5% of theoretical, a modulus of elasticity less than $3.17 \times 10^8$ kPa ($46 \times 10^6$ psi) and a diamond tool wear of less than .005 cm (o.002 inch) when removing 0.338 in $^3$ of product material.

## Detailed Description and Best Mode

There is an urgent need for ceramics for advanced heat engines, cutting tools and structural ceramics which are free of flaws and have greater reliability from commercial production. This invention provides a method for manufacturing a pure, one component powder (essentially prereacted silicon nitride) that is useful in conventional heat fusion techniques for creating the fully densified ceramic body. The first aspect of this method requires the making of a readily fusable, one component silicon nitride powder and comprises heating a powder mixture of a silicon nitride precursor possessing silicon-nitrogen and nitrogen-hydrogen bonds, and an oxygen carrying agent effective to form a sintering aid. The heating is carried out in an inert atmosphere at a temperature effectively below the fusion temperature of the mixture and for a period of time sufficient to chemically reduce the mixture to grains of silicon nitride bonded and encapsulated by crystallites chemically resulting from both the precursor and agent.

## Preparation of the Silicon Nitride Precursor

The inventive method requires the use of a silicon nitride precursor which here is preferably in the form of silicon diimide having the formula $Si(NH)_2$. Precursors of this type have been formed by the prior art according to several different mechanisms, namely: (a) a liquid-to-gas reaction of the silicon halide and ammonia in the presence of benzene or hexane at -10°C to 5°C for .5-2 hours (see U.S. patent 3,959,446); (b) a solid-to-gas reaction of the silicon halide and ammonia at about -196°C (see O. Glemser and P. Naumann "Über den thermischen Abbau von Siliciumdiimid $Si(NH)_2$", Zeitschrift fur Anorganiche und Algemeine Chemie, Band 298, 134-141 (1959)); and (c) a liquid-to-liquid organic boundary phase reaction of the silicon halide and ammonia (see U.S. patent 4,196,178).

However, in order to achieve a purity of 99.98% or greater, which is required by this invention, the method of a liquid-to-liquid reaction of the silicon halide and ammonia at significantly subzero temperatures is required. Such a method of making so pure a precursor is disclosed in copending U.S. application Serial No. 85-197 , commonly assigned to the assignee of this invention and filed simultaneously with the present application. The disclosure of said application is incorporated herein by reference. In such disclosure the precursor is essentially made by a method comprising the steps of: (a) continuously reacting liquid silicon halide ($SiCl_4$) with an excess of liquid ammonia (i) in the substantial absence of contaminants (ii) at a reaction situs in an inert atmosphere to form the silicon nitride precursor as a precipitate and (iii) with a ratio of liquid ammonia to silicon halide effective to completely react the silicon halide and to solubilize any gas reaction products and to maintain the desired viscosity of the solution/suspension mix; (b) simultaneously and liquid ammonia, and then add silicon tetrachloride in droplets to the excess ammonia pool. Liquid ammonia is immediately withdrawn on a continuous basis from the excess pool through a filtering means resulting in the removal of ammonium chloride (which is soluble in the excess liquid ammonia) while leaving behind the silicon imide precipitate. The withdrawn ammonia can be recycled or reconverted for replenishment to the reaction chamber. The replenishment of additional ammonia or concurrent adding of recycled ammonia is carried out to maintain a liquid ammonia/liquid silicon tetrachloride molar ratio equal to or greater than 21, and to maintain the temperature of the reaction situs in the range of -33.3°C to -69°C. The ammonium chloride side-product can additionally be reacted with sodium or potassium hydroxide to release an additional source of ammonia gas for economy.

The precursor is characterized by silicon-nitrogen and nitrogen-hydrogen bonds and a very reactive surface for second phase (oxynitride) development. The importance of these bonds is due to the high difference in electronegativity of the elements and the possibility of interaction of the free electron pair of nitrogen with the "d" orbitals of silicon. This great difference in electronegativity of silicon and nitrogen leads to the required high thermal stability of the precursor required by this invention. Such bonds result directly from the processing by nucleophilic attack by ammonia on the ionic silicon chlorine bond.

Selection of Oxygen Carrying Agents

Reactive oxygen carrying agents are defined here to mean powder ingredients that are effective to form second phase crystallites, particularly oxynitrides and/or appropriate silicates when reacted with the silicon nitride precursor under a heated nitrogen atmosphere. The oxygen carrying agents can be advantageously selected from the group consisting of $Y_2O_3$, $SiO_2$, MgO, $CeO_2$, $ZrO_2$, $HfO_2$, and other rare earth oxides. Use of these agents will improve physical characteristics and formation of a second phase crystallite and appropriate silicates. Aluminum oxide ($Al_2O_3$) may also be included in such list, but must be present with one or more of the other agents since aluminum oxide will not act by itself as a sintering aid.

The $Y_2O_3$ powder is selected to have a purity equal to or greater than 99.99% with an average crystallite size of .4$\mu$m (400 angstroms). The alumina which is added as a powder usually has a purity of 99.5% or greater and an average particle size of .3-.5$\mu$m microns. $SiO_2$ powder is selected to have a purity greater than 99.99% and an average particle size less than one micron.

The silicon nitride precursor will have a purity equal to or greater than 99.98% and is of an extremely fine particle size due to the solution/nonaqueous and nonorganic dispersion creation of such powder precipitate. The silicon imide will have an average particle size of less than one micron. The wet environment and low electrical field present during the solution/nonaqueous dispersion and nonorganic generation of such imide powder results in very fine nucleation with little encouragement of particle growth during the precipitation reaction.

To the silicon nitride precursor, as the major constituent of the mixture, is added preferably 2-12% by weight $Y_2O_3$, .5-4% by weight $Al_2O_3$, and .5-3.5% by weight $SiO_2$ (normalized as to $Si_3N_4$); the imide will constitute the remaining part of the mixture.

The major trace elements present in the yttria usually comprise metal and rare earth oxides and carbon and are present in no greater an amount than 0.01 weight percent. Commercially available alumina contains trace impurities of metal oxides and are usually present in no greater amounts than 0.5 weight percent.

The mixture can be blended or homogenized as the last step after the formation of the silicon imide, wherein an excess liquid ammonia pool is present. Such ingredients as $Y_2O_3$, alumina and $SiO_2$ are added to the excess liquid ammonia pool and mechanically or ultrasonically stirred to associate in a uniform homogeneous manner with the silicon diimide precipitate. The liquid ammonia is then driven off by removing the cooling jacket and warming to room temperature, leaving a thoroughly blended and mixed powder.

Alternatively, the mixture may be homogenized by blending in a dry blending container with grinding media and container made of the same composition as the desired fusable, one component silicon nitride powder for a period of about 24 hours.

Heating

The blended mixture is then placed in a crucible of the same nominal composition as the desired fusable, one component silicon nitride powder and inserted into a furnace and heated to the temperature range of 1150-1350°C, certainly to a temperature substantially below the fusion temperature of such imide or oxygen carrying agents. Such fusion temperature would be about 2410°C for the oxygen carrying agents and 1780°C for the silicon imide. The mixture is maintained at such heated temperature for a period of at least 4 hours, preferably about 8 hours, in a nonoxidizing atmosphere selected from nitrogen, hydrogen, helium and mixtures thereof.

The silicon nitride precursor will chemically transform under such heated conditions to produce silicon nitride bonded and encapsulated by silicon yttrium oxynitride crystallites and a glassy silicate. During such reaction nitrogen and hydrogen will be evolved as a gas to promote the volatilization of $SiO_2$ and SiO, which in turn promotes the formation of an alpha phase silicon nitride as opposed to beta phase silicon nitride. The formation of alpha phase silicon nitride involves silicon monoxide as the transient intermediate. Typically, the alpha/beta ratio will be 4 to 19. This compares very favorably with prior art techniques where a range of 1.3 to 12 is attained utilizing only very high temperature with very complex precautions. The unexpected reduction in operating temperature and time favors diffusion of the byproduct gases and furnace atmosphere because the particles are not fused.

Samples

Several samples were prepared to corroborate certain aspects of the invention. Each sample was made by mixing a silicon nitride precursor in the form of $Si(NH)_2$. Such precursor has silicon-nitrogen and nitrogen-hydrogen bonds. The precursor was mixed with variable amounts of sintering aids which are within the scope of the oxygen carrying agents that are suggested to be used herein. The purity of the fusable, one component silicon nitride powder, the prereaction time and temperature were recorded. The mixture was homogenized in accordance with the previous description and subjected to a prereaction heating sequence as earlier described, except for the noted conditions of Table I. Then, the fusable, one component silicon nitride powder was analyzed to determine the presence of crystalline alpha/beta silicon nitride and second phase silicon-yttrium-oxynitride crystallites and glassy silicates. The powder was then shaped by compaction and subjected to fusion heat treatment in the form of hot pressing at a pressure of $1.7 \times 10^4$ - $2.8 \times 10^4$ kPa (2500-4000psi) and a temperature of 1038-1704°C (1900-3100°F) for a period of time resulting in maximum ram movement of .0025 to .005 cm (0.001 to 0.002 inches) within a 10 minute time interval in an atmosphere of nitrogen or a maximum time of six hours. The resulting silicon nitride object was then analyzed to determine the room temperature strength (4-point bend), the Weibull modulus as well as the strength of the silicon nitride object at an elevated temperature of 1200°C, and other physical properties as listed.

Sample 1 was made according to the teachings of this invention and exhibited excellent results.

In sample 2 the absence of aluminum oxide as one of the oxygen carrying agents caused a reduction in the strength of the resulting hot pressed object at room temperature and failure at 1200°C. The sample 2 object as a cutting tool against cast iron would not perform at 6000 sfpm. Sample 2 physical reductions may be due to reductions in glassy phase encapsulate formation on crystallites during prereaction heating which affect the use of the powder as a cutting tool material for cast iron, but which powder is satisfactory for other lower temperature applications.

In sample 3 only yttrium oxide was employed as the oxygen agent which resulted in reduced effectiveness as a sintering aid and resulted in the absence of second phase silicon yttrium oxynitride crystallites and reduction in the room and high temperature strength. The sample 3 object failed to perform at 6000 sfpm as a cutting tool against cast iron.

When the purity of the silicon nitride precursor in sample 4 was contaminated with carbon and chlorine and reduced to 98%, the sample 4 object would not perform at 6000 sfpm as a cutting tool against cast iron. The precursor powder of sample 4 was prepared by the prereaction heating of an imide that was not prepared by that suggested in this invention but by the liquid-to-gas reaction described in U.S. patent 3,959,446.

Sample 5 demonstrates the effect that an elevated prereaction temperature will have above that suggested for this invention. Sample 6 indicates what happens to the resultant silicon nitride object when the purity of the oxygen agent is not maintained at a high level resulting in a prereacted powder purity of only 97%. Sample 7 demonstrates the effect of too low a prereaction temperature even though high purity levels were achieved. Sample 8 demonstrates the effect of the absence of a sintering aid in the mixture.

As shown by the above examples, the degree of purity, prereaction heating temperature and effectiveness of the sintering aid play important roles in optimizing the physical qualities of the one component powder.

TABLE I

| Sample | Amount of Oxygen Agents Normalized As Si₃N₄ Mix | Prefiring Temp. (°C) & Time | Purity of Prefired Powder | Alpha/Beta Ratio | Presence of Si-Y-O-N Crystallites & Glassy Silicate | Room Temp. 4-pt. Bend Strength (psi) | Weibull Modulus | 1205°C Temp. Strength % Decrease From Rm. Temp. | Modulus of Elasticity (psi) | Diamond Wear to Remove 0.33in³ of Stock | % of Theoretical Density | Satisfactory Cutting Tool Usage at 6000sfm Against Cast Iron |
|---|---|---|---|---|---|---|---|---|---|---|---|---|
| 1 | 8% Y₂O₃ 1% Al₂O₃ 1.5% SiO₂ | 1275 6 hrs. | >99.97% | 8.5 | Yes | (>150,000) 10.3x10⁵kPa | 16 | <10% decrease | (<46x10⁶) 3.17x10⁸kPa | (<.002 in.) .005cm | >98.5% | Yes |
| 2 | 10% Y₂O₃ 1% SiO₂ | " | " | 9 | No | (80,000) 5.5x10⁵kPa | 4 | Samples Cracked | -- | (.01 in.) .025cm | <98.5% | Fail |
| 3 | 8% Y₂O₃ | " | " | 3 | " | (60,000) 4.1x10⁵kPa | 4.3 | >50% decrease | -- | -- | " | " |
| 4 | 8% Y₂O₃ 1% Al₂O₃ 1.5% SiO₂ | 1275 6 hrs. | 96% | 4 | Yes | (40,000) 2.75x10⁵kPa | 4 | >60% decrease | (>46x10⁶) 3.17x10⁸kPa | -- | " | " |
| 5 | 8% Y₂O₃ 1% Al₂O₃ 1.5% SiO₂ | 1460 12 hrs. | >95.97% | 0.1 | Yes | (60,000) 4.1x10⁵kPa | 10 | >20% decrease | -- | -- | -- | " |
| 6 | 10% Y₂O₃ 1.5% Al₂O₃ 2% SiO₂ | 1350 12 hrs. | 97% | 1.5 | Yes | (75,000) 5.13x10⁵kPa | 4 | >% decrease | (>46x10⁶) 3.17x10⁸kPa | (.015 in.) .05cm | <98.5% | " |
| 7 | 6% Y₂O₃ 1.0% Al₂O₃ 1.5% SiO₂ | 750 12 hrs. | >99.97% | amorphous | No | (35,000) 2.05x10⁵kPa | 4.4 | -- | -- | -- | -- | -- |
| 8 | 4% Al₂O₃ | 1300 6 hrs. | " | <1 | " | samples cracked | -- | -- | -- | -- | <98.5% | -- |

## Claims

1. A method of making a readily fusable, one component silicon nitride powder, which comprises heating a powder mixture of silicon nitride precursor possessing silicon-nitrogen and nitrogen-hydrogen bonds, and a purity of equal to or greater than 99.98% and an oxygen carrying agent effective as a sintering

EP 0 228 189 B1

agent, said oxygen carrying agent including 2-12 wt. % $Y_2O_3$, 0.5-4% $Al_2O_3$, and .5-3.5% $SiO_2$ normalized as an $Si_3N_4$ mixture, said heating being carried out in an inert atmosphere at a temperature effectively below the fusion temperature for said mixture and for a period of time sufficient to chemically reduce said mixture to grains of silicon nitride bonded and encapsulated by crystallite phases chemically resulting from both said precursor and agent.

2. A method as claimed in Claim 1, in which said precursor contains silicon-nitrogen and nitrogen-hydrogen bonds.

3. A method as claimed in Claim 2, in which said said precursor is $Si(NH)_2$.

4. A method as claimed in Claim 1, in which said heating is carried out in the temperature range of 1150-1350°Cfor a period of time of at least 4 hours.

5. A method as claimed in any one of the preceding claims, in which said heating atmosphere is comprised of nitrogen, hydrogen, helium and mixtures thereof.

6. A method as claimed in any one of the preceding claims, in which said mixture is homogenized prior to heating in the nonaqueous and nonorganic wet condition by mechanically or ultrasonically stirring said oxygen carrying agent into an excess pool of liquid ammonia containing said precursor under a nonoxidizing atmosphere and subsequently volatilizing the ammonia leaving a homogenized dry powder mixture as residue.

7. A method as claimed in any one of Claims 1 to 5, in which said mixture is homogenized prior to heating by dry grinding/blending in a nonoxidizing atmosphere for a period of about 24 hours using grinding media and container of the same composition as the resulting fusable, one component silicon nitride powder.

8. A method of making a densified silicon nitride shape, comprising forming a shape from said fusable, one component silicon nitride powder made by the method as claimed in any one of the preceding claims and heating said shape to a fusion temperature to produce a substantially fully densified shape.

9. A method as claimed in Claim 8, in which said forming is carried out by either slip casting, extrusion die casting or compaction.

10. A method as claimed in Claim 8 or 9, in which said heating to a fusion temperature is carried out by any one of hot pressing, sintering or hot isostatic pressing.

11. A product resulting from the practice of the method of Claim 8, said product being characterized by a four point bend strength at room temperature of 10.3 x $10^5$ kPa (150,000 psi) and a bend strength at an elevated temperature of 1200°C of a least 90% of room temperature value.

**Revendications**

1. Procédé pour produire une poudre facilement fusible de nitrure de silicium à un composant , qui comprend le chauffage d'un mélange pulvérulent d'un précurseur de nitrure de silicium contenant des liaisons silicium-azote et azote-hydrogène et ayant une pureté égale ou supérieure à 99,98 % et d'un agent porteur d'oxygène et capable de jouer efficacement le rôle d'un agent de frittage ,ledit agent porteur d'oxygène comprenant 2 à 12 % en poids de $Y_2O_3$ , 0,5 à 4 % de $Al_2O_3$ et 0,5 à 3,5 % de $SiO_2$, normalisé sous forme d'un mélange générateur de $Si_3N_4$ , ledit chauffage étant effectué en atmosphère inerte à une température nettement inférieure à la température de fusion dudit mélange,et pendant une période de temps suffisante pour réduire chimiquement ledit mélange à l'état de grains de nitrure de silicium liés et encapsulés par des phases de cristallites résultant chimiquement à la fois dudit précurseur et de l'agent (porteur d'oxygène).

2. Procédé tel que revendiqué à la revendication 1 , dans lequel ledit précurseur contient des liaisons silicium-azote et azote-hydrogène .

8

3. Procédé tel que revendiqué à la revendication 2 , dans lequel ledit précurseur est Si(NH)$_2$ .

4. Procédé tel que revendiqué à la revendication 1 , dans lequel ledit chauffage est effectué dans l'intervalle de température de 1 150 à 1 350 °C pendant une période de temps d'au moins 4 heures .

5. Procédé tel que revendiqué dans l'une quelconque des revendications précédentes ,dans lequel ladite atmosphère de chauffage est constituée d'azote , d'hydrogène , d'hélium et de leurs mélanges .

6. Procédé tel que revendiqué dans l'une quelconque des revendications précédentes , dans lequel ledit mélange est homogénéisé avant chauffage à l'état humide non aqueux et non organique , par l'incorporation par agitation mécanique , ou à l'aide d'ultra-sons ,dudit agent porteur d'oxygène dans une masse excédentaire d'ammoniac liquide contenant ledit précurseur en atmosphère non oxydante puis volatilisation de l'ammoniac laissant comme résidu un mélange pulvérulent sec homogénéisé .

7. Procédé tel que revendiqué dans l'une quelconque des revendications 1 à 5 ,dans lequel ledit mélange est homogénéisé avant chauffage, par broyage/mélangeage à sec en atmosphère non oxydante pendant une période d'environ 24 heures,en utilisant des milieux de broyage et un récipient ayant la même composition que la poudre fusible résultante de nitrure de silicium à un composant .

8. Procédé pour produire un objet façonné en nitrure de silicium densifié , comprenant le formage d'un objet façonné en ladite poudre fusible de nitrure de silicium à un composant ,produite par le procédé tel que revendiqué dans l'une quelconque des revendications précédentes , et le chauffage de cet objet façonné, jusqu'à une température de fusion ,pour produire un objet façonné quasi totalement densifié et compacté .

9. Procédé tel que revendiqué à la revendication 8 , dans lequel ledit formage est effectué par coulée en barbotine ,coulée par extrusion à travers une filière,ou compactage .

10. Procédé tel que revendiqué à la revendication 8 ou 9 ,dans lequel ledit chauffage jusqu'à une température de fusion est effectué par l'une quelconque des opérations suivantes : pressage à chaud, frittage ou compression isostatique à chaud .

11. Produit résultant de la mise en pratique du procédé de la revendication 8 , ,ledit produit étant caractérisé par une résistance à la flexion en quatre points, à la température ambiante , de 10,3 x 10$^5$ kPa ( 150 000 livres par pouce carré,psi) et par une résistance à la flexion à une température élevée de 1 200 °C d'au moins 90 % de la valeur constatée à la température ambiante.

**Patentansprüche**

1. Verfahren zur Herstellung eines gut schmelzenden Einkomponenten-Siliziumnitridpulvers, bei dem man eine Pulvermischung aus einem Siliziumnitridvorprodukt mit Silizium-Stickstoff- und Stickstoff-Wasserstoffbindungen und einer Reinheit von gleich oder größer als 99,98% und einem als Sintermittel wirksamen Sauerstoffträger erhitzt, wobei jener Sauerstoffträger 2-12 Gew.-% Y$_2$O$_3$, 0,5-4% Al$_2$O$_3$ und 0,5-3,5% SiO$_2$ bezüglich einer standardisierten Si$_3$N$_4$-Mischung enthält, wobei das Erhitzen in einer Schutzgasatmosphäre bei einer effektiv unterhalb der Schmelztemperatur jener Mischung liegenden Temperatur und für eine zur chemischen Reduzierung jener Mischung zu Siliziumnitridkörnern, die durch chemisch aus sowohl jenem Vorprodukt und Mittel entstandene Kristallitphasen gebunden und verkapselt sind, ausreichende Zeitdauer erfolgt.

2. Verfahren nach Anspruch 1, worin jenes Vorprodukt Silizium-Stickstoff- und Stickstoff-Wasserstoffbindungen aufweist.

3. Verfahren nach Anspruch 2, worin jenes Vorprodukt Si(NH)$_2$ ist.

4. Verfahren nach Anspruch 1, worin jenes Erhitzen in dem Temperaturbereich von 1150-1350°C für eine Zeitdauer von mindestens 4 Stunden erfolgt.

5. Verfahren nach einem der vorhergehenden Ansprüche, worin jene Heizatmosphäre aus Stickstoff, Wasserstoff, Helium und deren Mischungen besteht.

**6.** Verfahren nach einem der vorhergehenden Ansprüche, beiden man jene Mischung vor dem Erhitzen im nichtwäßrigen und nichtorganischen nassen Zustand durch mechanisches oder Ultraschall-Einrühren jenes Sauerstoffträgers in ein Bad aus überschüssigem, jenes Vorprodukt enthaltenden Ammoniak unter einer nicht oxidierenden Atmosphäre homogenisiert und anschließend den Ammoniak verdampft, wobei als Rückstand eine homogenisierte Trockenpulvermischung verbleibt.

**7.** Verfahren nach einem der Ansprüche 1 bis 5, bei dem man jene Mischung vor dem Erhitzen durch Trockenmahlung bzw. -mischen in einer nicht oxidierenden Atmosphäre etwa 24 Stunden lang unter Verwendung von Mahlkörpern und -gefäßwandungen derselben Zusammensetzung wie das entstehende schmelzbare Einkomponenten-Siliziumnitridpulver homogenisiert.

**8.** Verfahren zur Herstellung eines verdichteten Siliziumnitridformkörpers, bei dem man aus jenem schmelzbaren Einkomponenten-Siliziumnitridpulver nach dem Verfahren nach einem der vorhergehenden Ansprüche einen Formkörper bildet und jenen Formkörper unter Herstellung eines im wesentlichen voll verdichteten Formkörpers auf die Schmelztemperatur erhitzt.

**9.** Verfahren nach Anspruch 8, bei dem jenes Formen entweder durch Schlickergießen, Druckgießen oder Preßdruck erfolgt.

**10.** Verfahren nach Anspruch 8 oder 9, bei dem jenes Erhitzen auf die Schmelztemperatur entweder durch Heißpressen, Sintern oder durch heißisostatisches Pressen erfolgt.

**11.** Produkt aus dem Herstellungsverfahren des Anspruchs 8, gekennzeichnet durch eine Vierpunkt-Biegefestigkeit bei Zimmertemperatur von $10,3 \times 10^5$ kPa (150 000 psi) und eine Biegefestigkeit bei einer erhöhten Temperatur von 1200°C von mindestens 90% des Zimmertemperaturwertes.